(19) **Europäisches Patentamt**
**European Patent Office**
**Office européen des brevets**

(11) **EP 2 035 733 B1**

(12) **EUROPEAN PATENT SPECIFICATION**

(45) Date of publication and mention
of the grant of the patent:
**04.08.2010 Bulletin 2010/31**

(51) Int Cl.:
***F16K 31/52*** *(2006.01)*

(21) Application number: **07755541.5**

(86) International application number:
**PCT/US2007/009309**

(22) Date of filing: **17.04.2007**

(87) International publication number:
**WO 2007/136481 (29.11.2007 Gazette 2007/48)**

(54) **METHOD AND ROTARY VALVE ACTUATOR**

VERFAHREN UND DREHVENTILSTELLGLIED

PROCÉDÉ ET MOYEN D'ACTIONNEMENT DE VANNE ROTATIVE

(84) Designated Contracting States:
**DE FI FR GB SE**

(30) Priority: **18.05.2006 US 436451**

(43) Date of publication of application:
**18.03.2009 Bulletin 2009/12**

(73) Proprietor: **FISHER CONTROLS INTERNATIONAL LLC**
**St. Louis, MO 63136 (US)**

(72) Inventor: **DALLUGE, Paul, Russell**
**Marshalltown, IA 50158-5475 (US)**

(74) Representative: **Bohnenberger, Johannes et al**
**Meissner, Bolte & Partner GbR**
**Widenmayerstrasse 48**
**80538 München (DE)**

(56) References cited:
**WO-A-98/49482       FR-A- 1 460 561**
**GB-A- 966 039        NL-C1- 1 002 645**
**US-A- 3 261 266**

## Description

### FIELD OF THE DISCLOSURE

This disclosure relates generally to a method and rotary valve actuator to apply increased torque proximate the open or closed position of a valve and, more particularly, to a method and rotary valve actuator having a lever disposed at a rotational position to apply maximum torque proximate the fully open or the fully closed position of the valve.

### BACKGROUND

Process control plants or systems often employ rotary valves, such as ball valves, butterfly valves, eccentric-disk valves, eccentric-plug valves, etc. to control the flow of process fluids. In general, rotary valves typically include a fluid flow valve member disposed in the fluid path and coupled rotatably to the body of the rotary valve via a shaft. Typically, a portion of the shaft extending from the rotary valve functions as a valve stem, and an end of the shaft or valve stem may be coupled operatively to an actuator (e.g., a pneumatic actuator, an electric actuator, a hydraulic actuator, etc.) of the rotary valve. The actuator may include a lever coupled to the shaft and the lever may be displaceable by an actuator member such as, for example, an actuator rod, whereby a linear displacement of the actuator rod is converted into a rotational displacement of the lever, the shaft and the valve member.

In operation, a controller may cause the actuator to rotate the lever and shaft and, thus, the valve member to a desired angular position to vary an amount of fluid flowing through the rotary valve. When the valve member is closed, the valve member is typically configured to engage an annular or circumferential seal that encircles the flow path through the rotary valve to prevent the flow of fluid (e.g., in one or both directions).

Typically, rotary valve actuators, and in particular quarter-tum rotary valve actuators, which have a rotational displacement of approximately ninety degrees, apply the maximum amount of torque to the valve member at approximately the midpoint of the rotation of the valve member (i.e., at about forty-five degrees from the fully open or the fully closed positions). However, the highest torque requirements for rotary valves usually occur when the valve member is proximate either the fully closed or the fully open position of the valve member. Thus, when the valve member of a typical rotary valve is proximate either the fully closed or the fully open position, the maximum amount of torque is not applied to the valve member.

FR 1,460,561 is considered to be the closest prior art and discloses a valve actuator according to the preamble of claim 1.

### SUMMARY

In accordance with one example, a rotary valve actuator comprises an elongated actuator member configured to move in response to a control signal and a lever configured to receive a shaft associated with a valve. The rotary valve actuator also includes a lever arm coupled rotatably to an end of the actuator member so that when the lever is coupled to the shaft of the valve, the elongated actuator member applies a maximum torque to the shaft when the valve is proximate a fully closed or a fully open position.

In accordance with another example, a method to apply maximum torque proximate a fully open or a fully closed position of a valve of a rotary valve actuator, wherein the rotary valve actuator has an elongated actuator member coupled rotatably to a lever configured to receive a shaft of a valve, comprises positioning the lever so that the valve is in a fully open position or a fully closed position when a longitudinal axis of the lever is at a first rotational position that is substantially less than or substantially greater than forty five degrees from a second rotational position at which the actuator member is substantially perpendicular to the longitudinal axis of the lever, and displacing the actuator member so that when the lever rotates to the rotational position at which the actuator member is substantially perpendicular to the longitudinal axis of the lever, the maximum torque is applied to the valve proximate the fully open or the fully closed position of the valve.

### BRIEF DESCRIPTION OF THE DRAWINGS

FIG. 1 is a cross-sectional view of an example rotary valve actuator.

FIG. 2 is a cross-sectional view of the example rotary valve actuator in FIG. 1 illustrating the rotary valve and valve member.

FIG. 3 is an enlarged cross-sectional view of a portion the example rotary valve actuator of FIG. 1.

FIG. 3A is a depiction of alternative couplings of the actuator member with the lever and the lever with the actuator shaft of the rotary valve actuator.

FIG. 4 is a flow chart of an example process to apply maximum torque proximate the fully open or the fully closed of a valve of a rotary valve actuator.

### DETAILED DESCRIPTION

The example method and rotary valve actuator disclosed herein applies increased torque proximate the open or the closed positions of a valve. In contrast to typical rotary valve actuators, which apply the maximum amount of torque proximate the midpoint of the range of rotation of the valve member (i.e., about halfway between the fully open position and the fully closed position), the example method and rotary valve actuator applies the maximum amount of torque proximate the fully open or the fully closed position of the valve member.

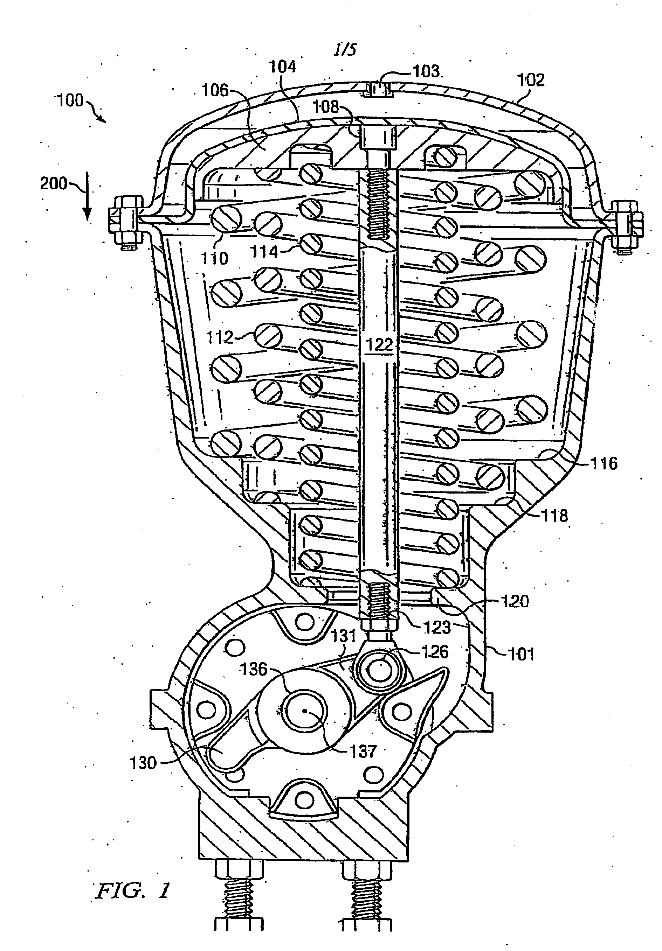

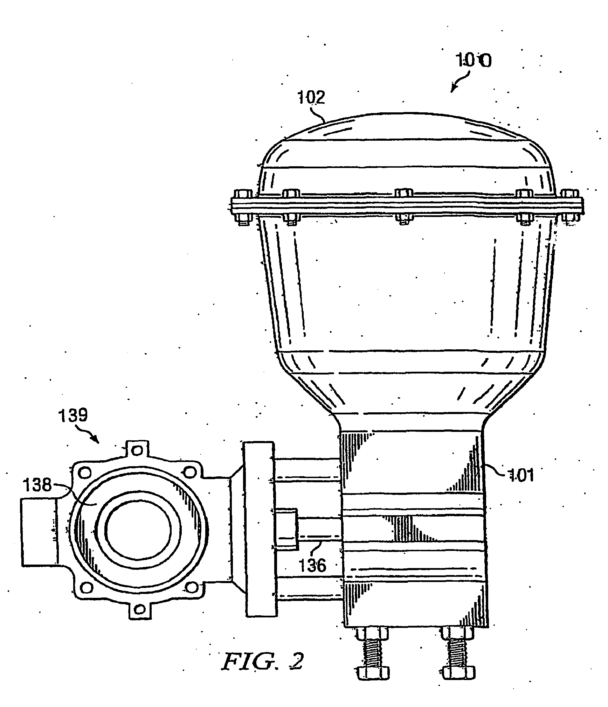

FIG. 1 is a cross-sectional view of an example rotary valve actuator 100. The rotary valve actuator 100 includes an actuator body 101 having a diaphragm casing 102 containing an inlet 103, and a diaphragm 104 located adjacent a diaphragm plate 106 coupled to a diaphragm stem 108. The diaphragm plate 106 engages three actuator springs 110, 112 and 114 disposed between the diaphragm plate 106 and body shoulders 116, 118 and 120, respectively. The diaphragm stem 108 is coupled to an actuator rod or elongated actuator member 122 coupled (e.g., via threads) to a rod end 123 having a rod end bearing 126. The rod end bearing 126 is coupled to an actuator lever 130 at a lever arm 131, and the lever 130 is rotatable about an axis 137. The actuator lever 130 is coupled to an actuator shaft 136 that is coupled to a valve member 138 of the rotary valve 139 (see FIG. 2). Although the rotary valve actuator 100 is illustrated in FIG. 1 as a pneumatic rotary valve actuator, the rotary valve actuator 100 may, alternatively, be any of several types of actuators such as, for example, an electric actuator, or a hydraulic actuator. Likewise, the valve member 138 can be any valve such as, for example, a butterfly valve, an eccentric-disk valve, or an eccentric-plug valve that may be rotated by a rotary valve actuator, such as, for example, the rotary valve actuator 100.

In operation, the rotary valve actuator 100 receives a control signal such as, for example, compressed air, at the inlet 103 to displace the diaphragm 104 and the diaphragm plate 106 against the springs 110, 112 and 114. In FIG. 1, displacement of the diaphragm plate 106 in the direction of arrow 200 results in a corresponding displacement of the actuator member 122 to rotate the actuator lever 130 and the actuator shaft 136 about the axis 137 and rotate the valve member 138 to vary or control the flow of fluid through the rotary valve 139.

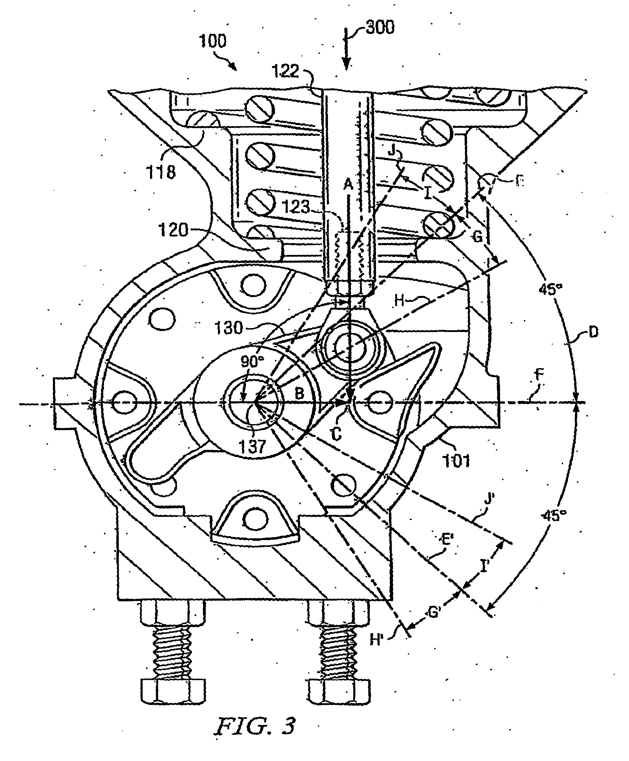

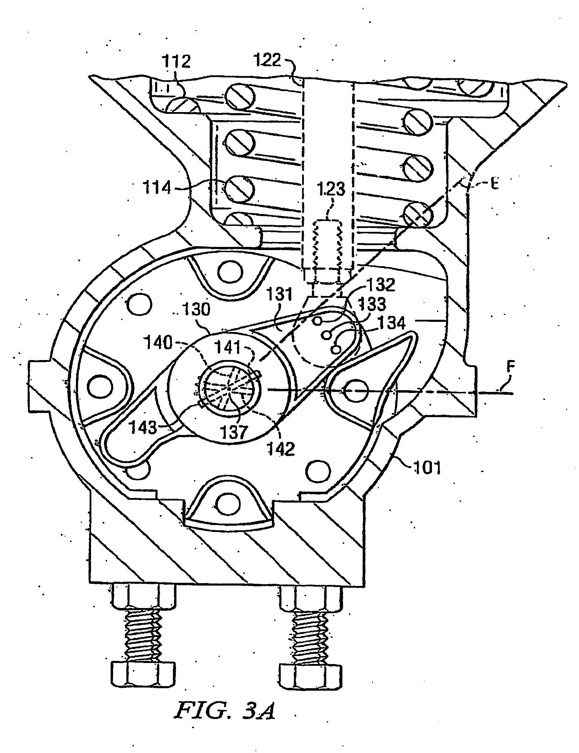

Referring to FIG. 3, an enlarged portion of the example rotary valve actuator 100 shown in FIGS 1 and 2 is illustrated. The actuator member 122 is displaced in the direction of arrow 300 to rotate the actuator lever 130. The force exerted by the actuator member 122 is depicted in FIG. 3 as a vector or force A. The moment of a force such as, for example, force A in FIG. 3, may be defined as a turning effect produced by a force at some distance from an axis of rotation. Alternatively, the moment of a force may be defined as a measure of the tendency of the force to cause a body to rotate about a specific point or axis (i.e., the center of moments). Thus, in FIGS. 1 and 3 the moment of the force A applied by the actuator member 122 to the actuator lever 130 is determined according to Equation 1 set forth below.

$$M = Fd$$

Where
$M$ is the Moment
$F$ is the force
$d$ is the distance of the moment arm

**Equation 1**

In FIGS. 1 and 3, the moment of the force A applied by the actuator member 122 to the actuator lever 130 is the product of the force A times the length $d$ of the moment arm B from the axis 137 (i.e., the center of moments) to the point C on the lever 130 when the force A is perpendicular to the moment arm B. A similar measure of the operation of the rotary valve actuator 100 is the torque applied by the lever 130 to the rotary shaft 136 and the valve member 138. Torque may be defined as a measure of how much a force acting on an object causes that object to rotate. Torque is determined according to Equation 2 set forth below.

$$T = r\,F\,sin(\Theta)$$

Where
$T$ is torque
$r$ is the moment arm
$F$ is the force
$\Theta$ is the angle of F relative to r

**Equation 2**

As can be readily seen from Equation 2, the maximum torque $T$ is produced when the force F is perpendicular to the moment arm $r$ (e.g., sin 90° = 1) so that $T = r\,F$.

In FIG. 3, the actuator lever 130 is displaced or rotated by the actuator member 122 through an arc of approximately ninety degrees, as illustrated by arc D. Typically, in a known quarter-turn rotary actuator, the lever 130 would be positioned initially so that its longitudinal axis or centerline position E is forty-five degrees from a position at a longitudinal axis or centerline position F where the actuator member 122 is disposed perpendicular to the lever 130. In a rotary valve actuator, the centerline position F may be referred to as the moment arm position F of the lever 130. For the known rotary valve actuator, the operatively coupled valve member 138 would be in either a fully closed or a fully open position when the lever 130 is positioned along the centerline position E, whereby the rotation of the lever 130 through approximately ninety degrees to a longitudinal axis or centerline position E' would apply the maximum amount of torque to the valve member 138 at approximately the midpoint of the rotation (i.e., at forty-five degrees of rotation when the actuator member 122 is perpendicular to the lever 130 at centerline position F). However, the largest torque requirements for a rotary valve actuator such as, for example, the example rotary valve actuator 100, are at the fully open or the fully closed positions of the associated valve member 138. Thus, a known rotary valve actuator, which attains the moment arm position F at approximately the midpoint between the fully open or the fully closed position of the valve member, is not able to apply the maximum amount of torque to the valve member proximate the fully open or the fully closed positions of the valve member.

The example method and rotary valve actuator 100 disclosed herein apply maximum torque to the valve member 138 proximate the fully open or the fully closed positions of the valve member 138. Referring to FIG. 3, the example rotary valve actuator 100 may include the actuator lever 130 positioned at an initial angular or rotational position to apply the maximum torque closer to or proximate either the fully open or the fully closed positions of the valve member 138. FIG. 3 illustrates the lever 130 at an initial rotational position along a centerline position H whereby the lever 130 is disposed less than forty-five degrees from the moment arm position F of the lever 130. The valve member 138 is in a closed position (e.g., fully closed position) when the lever 130 is disposed at the centerline position H. When the actuator member 122 is displaced in the direction of arrow 300 in FIG. 3, the lever 130 is rotated through approximately ninety degrees to a centerline position H'. The initial rotational position of the lever 130 at the centerline position H is offset angularly a predetermined amount of degrees from the centerline position E, as represented by an arc G, and the angular offset is preferably, but not necessarily, within the range of ten to twenty degrees. A corresponding amount of angular offset at the end of the rotation of the lever 130 is illustrated by an arc G' having a corresponding range of ten to twenty degrees. Thus, when the lever 130 is rotated from the centerline position H to the centerline position H', the lever 130 attains the moment arm position F proximate the fully closed position of the valve member 138 as the lever 130 rotates the valve member 138 from the fully closed position. The positioning of the lever 130 at the initial rotational position of the centerline position H enables the actuator 100 to apply the maximum amount of torque to the valve member 138 proximate the fully open position of the valve member 138.

Referring again to FIG. 3, the lever 130 may be disposed at an initial rotational position along its longitudinal axis or centerline position J, whereby the lever 130 is disposed greater than forty-five degrees from the moment arm position F of the lever 130. The valve member 138 may be at a fully closed position when the lever 130 is disposed at centerline position J. when the actuator member 122 is displaced in the direction of arrow 300 in FIG. 3, the lever 130 is rotated through approximately ninety degrees to longitudinal axis or centerline position J'. The initial rotational position of the lever 130 at the centerline position J is offset angularly a predetermined amount of degrees from the centerline position E, as represented by an arc I, and the angular offset is preferably, but not necessarily, within the range of ten to twenty degrees. A corresponding amount of angular offset at the end of the rotation of the lever 130 is illustrated by an arc I' having a range of ten to twenty degrees. Thus, as the lever 130 rotates from the centerline position J to the centerline position J', the lever 130 attains the moment arm position F proximate the fully open position of the valve member 138 at the centerline position J'. The positioning of the lever 130 at the initial rotational position of the centerline position J enables the actuator 100 to apply the maximum amount of torque to the valve member 138 proximate the fully open position of the valve member 138.

The actuator lever 130 may be disposed at the initial rotational positions of the centerlines H or J or, for example, at other initial rotational positions within the preferred angular offset range of ten to twenty degrees, by utilizing different couplings of the actuator member 122 to the lever 130 or the lever 130 to the actuator shaft 136. Referring to FIG. 3A, alternative couplings of the actuator member 122 (shown in phantom) with the lever 130 and the lever 130 with the actuator shaft 136 of the rotary actuator 100, are illustrated. At the lever arm 131, the actuator lever 130 may include a plurality of openings 132, 133 and 134 for coupling the actuator member 122 to the lever 130 by a fastener (not shown). The openings 132, 133 and 134 are angularly spaced-apart relative to one another and the axis 137. The openings 132, 133 and 134 are located such that when the actuator member 122 is coupled with the lever 130 by the fastener, the lever 130 may be positioned at different initial rotational positions less than or greater than a position forty-five degrees (e.g., the centerline E) from the moment arm position F, and within the range of ten to twenty degrees from the position at forty-five degrees.

Alternatively, the rod end 123 (shown in phantom) is threadedly coupled to the actuator member 122 and includes the rod end bearing 126 coupled to the lever 130. The rod end 123 can be rotated relative to the actuator member 122 to vary the distance the rod end 123 extends from the actuator member 122. The rotary valve actuator 100 will maintain the actuator member 122 in an initial or at-rest position of the actuator member 122 as illustrated in FIG. 1. However, by varying the distance the rod end 123 extends from the actuator member 122, the lever 130 may be disposed at different initial rotational positions less than or greater than the centerline E position forty-five degrees from the moment arm F.

FIG. 3A. also illustrates another alternative coupling assembly to position the lever 130 at different initial rotational positions. The actuator shaft 136 may include therein openings 140, 141 and 142 (shown in phantom) to enable the lever 130 to be coupled by a fastening member 143 at different angular positions relative to the actuator shaft 136. In FIG. 3A, the fastening member 143 (e.g., a pin) is illustrated as being located at the opening 141. By selecting one of the openings 140, 141 or 142 to receive the fastening member 143 to couple the lever 130 to the actuator shaft 136, the lever 130 may be disposed at different initial rotational positions less than or greater than the centerline E position forty-five degrees from the moment arm F.

Alternatively, the lever 130 may be coupled to the shaft 136 by other known coupling assemblies such as, for example, between the lever 130 and the shaft 136 a key may be received in one of several slots.

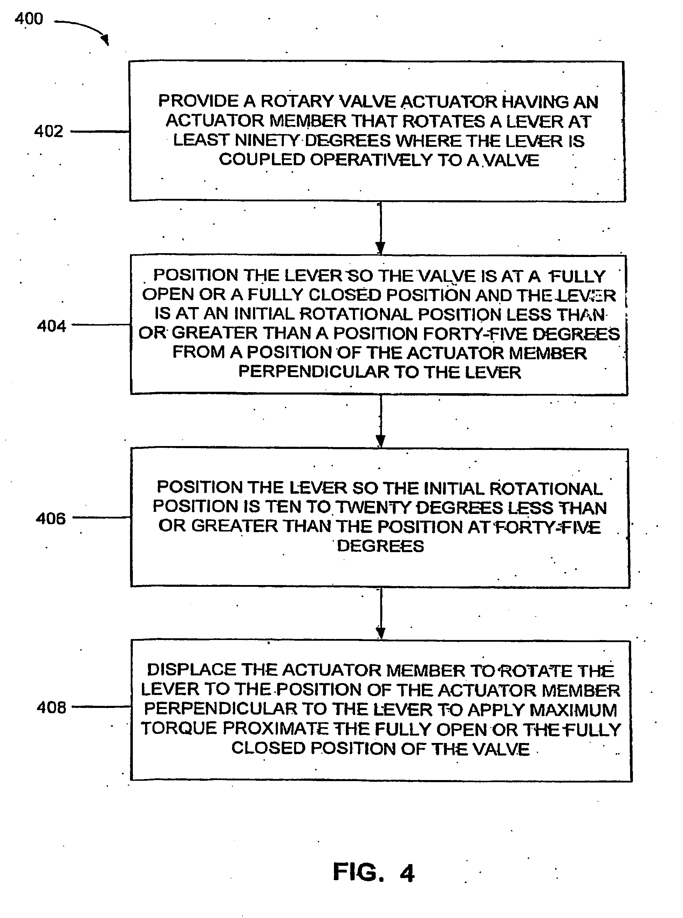

FIG. 4 is a representative flow chart of an example process or method 400 to apply maximum torque proximate the fully open or the fully closed positions of a valve operated by a rotary valve actuator. Initially, at block 402, the example method 400 includes providing a rotary valve actuator (e.g., the rotary valve actuator 100 in FIGS. 1-3A) having an actuator member (e.g., the actuator member 122) that rotates a lever (e.g., the actuator lever 130) at least about ninety degrees and the lever coupled operatively to a valve (e.g., the valve 138 in FIG. 2). Next, at block 404, the lever is positioned so the valve is disposed at a fully open or a fully closed position (e.g., see the fully closed valve 138 in FIG. 2) and the lever at an initial rotational position (e.g., the lever 130 positioned at an initial rotational position such as, for example, the centerline H in FIG. 3) that is less than (e.g., the centerline H) or greater than (e.g., the centerline J) a position forty-five degrees (e.g., the centerline E) from a position of the actuator member perpendicular to the lever (e.g., the centerline or moment arm position F when the actuator member 122 is perpendicular to the lever 130). The lever is positioned so the initial rotational position (e.g., the lever 130 positioned at either the centerline H or the centerline J in FIG. 3) is ten to twenty degrees less than or greater than the position at forty-five degrees (e.g., the centerline E), block 406. Then, at block 408, the actuator member (e.g., the actuator member 122 in FIG. 3) is displaced to rotate the lever (e.g., the actuator lever 130) to the position of the actuator member perpendicular to the lever (e.g., the centerline or moment arm position F in FIG. 3) to apply maximum torque proximate the fully open or the fully closed position of the valve (e.g., the fully closed position of the valve member 138 in FIG. 2). Thus, the positioning of the lever at the initial rotational position angularly offset from the typical initial rotational position of the lever in a known rotary valve actuator enables the rotary valve actuator to apply the maximum amount of torque to the valve proximate either the fully open or the fully closed position of the valve.

An example apparatus and method to apply torque proximate the opening or closing of a valve are described with reference to the flow chart illustrated in FIG. 4. However, persons of ordinary skill will readily appreciate that other methods of implementing the example method may alternatively be used. For example, the order of execution of the blocks may be changed, and/or some of the blocks described may be changed, eliminated, or combined.

Although a certain example method and apparatus have been described herein, the scope of coverage of this patent is not limited thereto. On the contrary, this patent covers all methods, apparatus and articles of manufacture fairly falling within the scope of the appended claims.

**Claims**

1. A rotary valve actuator (100), comprising:

    an elongated actuator member (122); and
    a lever (130) configured to receive a shaft (136) associated with a valve (139) and having a lever arm (131) coupled rotatably to an end of the actuator member (122) so that when the lever (130) is coupled to the shaft (136) of the valve (139) the elongated actuator member (122) applies a maximum torque to the shaft (136) when the valve (139) is proximate a fully closed or a fully open position,
    **characterised in that**
    either the lever arm (131) or the shaft (134) of the valve (139) comprises a plurality of openings (132-134, 140-142) to adjust a rotational position of the lever (130) relative to the fully closed or the fully open position of the valve (139).

2. A rotary valve actuator as defined in claim 1, wherein the end of the actuator member comprises a rod end that is adjustably engaged with the actuator member to change an effective length of the actuator member.

3. A rotary valve actuator as defined in claim 2, wherein the rod end is engaged threadingly with the end of the actuator member.

4. A rotary valve actuator as defined in claim 3, wherein the rod end includes a rod end bearing.

5. A rotary valve actuator as defined in claim 1, wherein the lever is coupled to the shaft of the valve so that the lever arm is at a first rotational position that is substantially less than or substantially greater than forty-five degrees from a second rotational position at which a longitudinal axis of the lever arm is substantially perpendicular to the actuator member.

6. A rotary valve actuator as defined in claim 5, wherein the first rotational position is in the range of ten to twenty degrees from a rotational position at which the longitudinal axis of the lever arm is forty-five degrees from the second rotational position.

7. A rotary valve actuator as defined in claim 1, wherein the actuator member is coupled operatively to a diaphragm.

8. A rotary valve actuator as defined in claim 1, wherein the actuator member is coupled operatively to at least one spring.

9. A rotary valve actuator as defined in claim 1, wherein the actuator member is configured to move in response to a control signal.

10. A method to apply maximum torque proximate a fully open or a fully closed position of a valve (139) of a rotary valve actuator (100), the rotary valve actuator (100) having an elongated actuator member (122) coupled rotatably to a lever (130) configured to receive a shaft (136) of a valve (139), the method comprising:

positioning the lever (130) so that the valve (139) is in a fully open position or a fully closed position when a longitudinal axis of the lever (130) is at a first rotational position that is substantially less than or substantially greater than forty-five degrees from a second rotational position at which the actuator member (122) is substantially perpendicular to the longitudinal axis of the lever (130); and
displacing the actuator member (122) so that when the lever (130) rotates to the rotational position at which the actuator member (122) is substantially perpendicular to the longitudinal axis of the lever (130) the maximum torque is applied to the valve (139) proximate the fully open or the fully closed position of the valve (139).

11. A method as defined in claim 10, wherein the positioning of the lever includes coupling the lever to the shaft.

12. A method as defined in claim 10, wherein the positioning of the lever includes coupling the actuator member to the lever.

13. A method as defined in claim 10, further including positioning the lever at the first rotational position in the range of ten to twenty degrees less than or greater than a position forty-five degrees from the second rotational position.

**Patentansprüche**

1. Drehschieberstellglied (100), Folgendes aufweisend:

ein langgestrecktes Stellgliedteil (122); und
einen Hebel (130), der dazu ausgelegt ist, eine einem Schieber (139) zugeordnete Welle (136) aufzunehmen, und einen Hebelarm (131) besitzt, der drehbar so mit einem Ende des Stellgliedteils (122) verbunden ist, dass, wenn der Hebel (130) mit der Welle (136) des Schiebers (139) verbunden ist, das langgestreckte Stellgliedteil (122) ein maximales Drehmoment an die Welle (136) anlegt, wenn der Schieber (139) nahe einer vollständig geschlossenen oder einer vollständig geöffneten Position ist,
**dadurch gekennzeichnet, dass**
entweder der Hebelarm (131) oder die Welle (134) des Schiebers (139) eine Vielzahl von Öffnungen (132 - 134; 140 - 142) aufweist, um eine Drehposition des Hebels (130) in Bezug auf die vollständig geschlossene oder die vollständig geöffnete Position des Schiebers (139) einzustellen.

2. Drehschieberstellglied nach Anspruch 1, wobei das Ende des Stellgliedteils ein Stabende aufweist, das mit dem Stellgliedteil einstellbar in Eingriff ist, um eine wirksame Länge des Stellgliedteils zu verändern.

3. Drehschieberstellglied nach Anspruch 2, wobei das Stabende mit dem Ende des Stellgliedteils in Gewindeeingriff steht.

4. Drehschieberstellglied nach Anspruch 3, wobei das Stabende ein Stabendenlager umfasst.

5. Drehschieberstellglied nach Anspruch 1, wobei der Hebel so mit der Welle des Schiebers verbunden ist, dass der Hebelarm in einer ersten Drehposition ist, die im Wesentlichen weniger als oder im Wesentlichen mehr als fünfundvierzig Grad von einer zweiten Drehposition entfernt liegt, in der eine Längsachse des Hebelarms im Wesentlichen senkrecht zum Stellgliedteil ist.

6. Drehschieberstellglied nach Anspruch 5, wobei die erste Drehposition im Bereich von zehn bis zwanzig Grad von einer Drehposition entfernt liegt, in der die Längsachse des Hebelarms fünfundvierzig Grad von der zweiten Drehposition entfernt liegt.

7. Drehschieberstellglied nach Anspruch 1, wobei das Stellgliedteil funktionsmäßig mit einer Membran verbunden ist.

**8.** Drehschieberstellglied nach Anspruch 1, wobei das Stellgliedteil funktionsmäßig mit mindestens einer Feder verbunden ist.

**9.** Drehschieberstellglied nach Anspruch 1, wobei das Stellgliedteil dazu ausgelegt ist, sich im Ansprechen auf ein Steuersignal zu bewegen.

**10.** Verfahren zum Anlegen eines maximalen Drehmoments nahe einer vollständig geöffneten oder einer vollständig geschlossenen Position eines Schiebers (139) eines Drehschieberstellglieds (100), wobei das Drehschieberstellglied (100) ein langgestrecktes Stellgliedteil (122) besitzt, das drehbar mit einem Hebel (130) verbunden ist, der dazu ausgelegt ist, eine Welle (136) eines Schiebers (139) aufzunehmen, wobei das Verfahren umfasst:

Positionieren des Hebels (130), und zwar so, dass der Schieber (139) in einer vollständig geöffneten Position oder einer vollständig geschlossenen Position ist, wenn eine Längsachse des Hebels (130) in einer ersten Drehposition ist, die im Wesentlichen weniger als oder im Wesentlichen mehr als fünfundvierzig Grad von einer zweiten Drehposition entfernt liegt, in der das Stellgliedteil (122) im Wesentlichen senkrecht zur Längsachse des Hebels (130) ist; und Verschieben des Stellgliedteils (122), und zwar so, dass, wenn sich der Hebel (130) in die Drehposition dreht, in der das Stellgliedteil (122) im Wesentlichen senkrecht zur Längsachse des Hebels (130) ist, das maximale Drehmoment nahe der vollständig geöffneten oder der vollständig geschlossenen Position des Schiebers (139) an den Schieber (139) angelegt wird.

**11.** Verfahren nach Anspruch 10, wobei das Positionieren des Hebels umfasst, den Hebel mit der Welle zu verbinden.

**12.** Verfahren nach Anspruch 10, wobei das Positionieren des Hebels umfasst, das Stellgliedteil mit dem Hebel zu verbinden.

**13.** Verfahren nach Anspruch 10, darüber hinaus umfassend, den Hebel in der ersten Drehposition im Bereich von zehn bis zwanzig Grad weniger als oder mehr als eine erste Position zu positionieren, die fünfundvierzig Grad von der zweiten Drehposition entfernt liegt.

**Revendications**

**1.** Actionneur de vanne rotative (100), comprenant :

un élément d'actionneur allongé (122) ; et

un levier (130) configuré pour recevoir un arbre (136) associé à une vanne (139), et ayant un bras de levier (131) couplé de manière rotative à une extrémité de l'élément d'actionneur (122) de telle sorte que lorsque le levier (130) est couplé à l'arbre (136) de la vanne (139), l'élément d'actionneur allongé (122) applique un couple maximum à l'arbre (136) lorsque la vanne (139) est à proximité d'une position entièrement fermée ou entièrement ouverte, **caractérisé en ce que** le bras de levier (131) ou l'arbre (134) de la vanne (139) comprend une pluralité d'ouvertures (132 à 134, 140 à 142) pour ajuster une position de rotation du levier (130) par rapport à la position entièrement fermée ou entièrement ouverte de la vanne (139).

**2.** Actionneur de vanne rotative selon la revendication 1, dans lequel l'extrémité de l'élément d'actionneur comprend une extrémité de tige qui est mise en prise de manière ajustable avec l'élément d'actionneur pour changer une longueur effective de l'élément d'actionneur.

**3.** Actionneur de vanne rotative selon la revendication 2, dans lequel l'extrémité de tige est mise en prise de manière vissée avec l'extrémité de l'élément d'actionneur.

**4.** Actionneur de vanne rotative selon la revendication 3, dans lequel l'extrémité de tige comprend un palier d'extrémité de tige.

**5.** Actionneur de vanne rotative selon la revendication 1, dans lequel le levier est couplé à l'arbre de la vanne de sorte que le bras de levier est dans une première position de rotation qui est sensiblement inférieure ou sensiblement supérieure à 45° par rapport à une seconde position de rotation dans laquelle un axe longitudinal du bras de levier est sensiblement perpendiculaire à l'élément d'actionneur.

**6.** Actionneur de vanne rotative selon la revendication 5, dans lequel la première position de rotation est dans la plage de dix à vingt degrés par rapport à une position de rotation dans laquelle l'axe longitudinal du bras de levier est à quarante-cinq degrés par rapport à la seconde position de rotation.

**7.** Actionneur de vanne rotative selon la revendication 1, dans lequel l'élément d'actionneur est couplé de manière opérationnelle à une membrane.

**8.** Actionneur de vanne rotative selon la revendication 1, dans lequel l'élément d'actionneur est couplé de manière opérationnelle à au moins un ressort.

**9.** Actionneur de vanne rotative selon la revendication 1, dans lequel l'élément d'actionneur est configuré pour se déplacer en réponse à un signal de commande.

**10.** Procédé pour appliquer un couple maximum à proximité d'une position entièrement ouverte ou entièrement fermée d'une vanne (139) d'un actionneur de vanne rotative (100), l'actionneur de vanne rotative (100) ayant un élément d'actionneur allongé (122) couplé de manière rotative à un levier (130) configuré pour recevoir un arbre (136) d'une vanne (139), le procédé comprenant les étapes consistant à :

positionner le levier (130) de telle sorte que la vanne (139) est dans une position entièrement ouverte ou entièrement fermée lorsqu'un axe longitudinal de levier (130) se trouve dans une première position de rotation qui est sensiblement inférieure ou sensiblement supérieure à quarante-cinq degrés par rapport à une seconde position de rotation dans laquelle l'élément d'actionneur (122) est sensiblement perpendiculaire à l'axe longitudinal du levier (130) ; et
déplacer l'élément d'actionneur (122) de telle sorte que lorsque le levier (130) tourne vers la position de rotation dans laquelle l'élément d'actionneur (122) est sensiblement perpendiculaire à l'axe longitudinal du levier (130), le couple maximum est appliqué à la vanne (139) à proximité de la position entièrement ouverte ou entièrement fermée de la vanne (139).

**11.** Procédé selon la revendication 10, dans lequel le positionnement du levier comprend le couplage du levier à l'arbre.

**12.** Procédé selon la revendication 10, dans lequel le positionnement du levier comprend le couplage de l'élément d'actionneur au levier.

**13.** Procédé selon la revendication 10, comprenant en outre le positionnement du levier au niveau de la première position de rotation dans la plage de dix à vingt degrés de plus ou de moins par rapport à une position de quarante-cinq degrés par rapport à la seconde position de rotation.

FIG. 1

FIG. 2

*FIG. 3*

FIG. 3A

400 —

402 — 

PROVIDE A ROTARY VALVE ACTUATOR HAVING AN ACTUATOR MEMBER THAT ROTATES A LEVER AT LEAST NINETY DEGREES WHERE THE LEVER IS COUPLED OPERATIVELY TO A VALVE

404 —

POSITION THE LEVER SO THE VALVE IS AT A FULLY OPEN OR A FULLY CLOSED POSITION AND THE LEVER IS AT AN INITIAL ROTATIONAL POSITION LESS THAN OR GREATER THAN A POSITION FORTY-FIVE DEGREES FROM A POSITION OF THE ACTUATOR MEMBER PERPENDICULAR TO THE LEVER

406 —

POSITION THE LEVER SO THE INITIAL ROTATIONAL POSITION IS TEN TO TWENTY DEGREES LESS THAN OR GREATER THAN THE POSITION AT FORTY-FIVE DEGREES

408 —

DISPLACE THE ACTUATOR MEMBER TO ROTATE THE LEVER TO THE POSITION OF THE ACTUATOR MEMBER PERPENDICULAR TO THE LEVER TO APPLY MAXIMUM TORQUE PROXIMATE THE FULLY OPEN OR THE FULLY CLOSED POSITION OF THE VALVE

FIG. 4

**EP 2 035 733 B1**

**REFERENCES CITED IN THE DESCRIPTION**

**Patent documents cited in the description**

- FR 1460561